# EUROPÄISCHE PATENTSCHRIFT

(11) **EP 4 286 609 B1**
(45) Veröffentlichungstag und Bekanntmachung des Hinweises auf die Patenterteilung: **22.01.2025**
(21) Anmeldenummer: 22176786.6
(22) Anmeldetag: 01.06.2022
(51) Int. Cl.: E02F 9/26, G01C 21/16, E02F 3/30

(54) **SYSTEM AUS MEHREREN INERTIALEN MESSEINHEITEN**
SYSTEM COMPRISING MULTIPLE INERTIAL MEASUREMENT UNITS
SYSTÈME COMPOSÉ DE PLUSIEURS CENTRALES INERTIELLES

(43) Veröffentlichungstag der Anmeldung: 06.12.2023
(73) Patentinhaber: Contelec AG, 2503 Biel/Bienne (CH)
(72) Erfinder: Knuchel, Fabian, 2540 Grenchen (CH)
(74) Vertreter: Jakelski & Althoff Patentanwälte PartG mbB

(56) Entgegenhaltungen:
- DE-A1- 102018 118 147
- DE-A1- 102021 100 324
- US-A1- 2018 373 275
- US-A1- 2019 242 687
- SALEHI SARVENAZ ET AL: "A Low-Cost and Light-Weight Motion Tracking Suit", 2013 IEEE 10TH INTERNATIONAL CONFERENCE ON UBIQUITOUS INTELLIGENCE AND COMPUTING AND 2013 IEEE 10TH INTERNATIONAL CONFERENCE ON AUTONOMIC AND TRUSTED COMPUTING, IEEE, 18 December 2013 (2013-12-18), pages 474 - 479, XP032561548, DOI: 10.1109/UIC-ATC.2013.22

## Beschreibung

Die vorliegende Erfindung betrifft ein System aus mehreren an einem Bagger angeordneten inertialen Messeinheiten (im Folgenden als IMU(s) bezeichnet), welche Drehraten und/oder Beschleunigungen messen können.

### Stand der Technik

Eine inertiale Messeinheit besteht aus mehreren inertialen Sensoren, insbesondere aus Beschleunigungssensoren, welche die Beschleunigung in drei Dimensionen messen, und Gyroskopen, welche die Drehraten - also die Winkelgeschwindigkeit - in drei Dimensionen messen. Aus diesen Daten lassen sich die Position und die (Winkel-)Geschwindigkeit eines Objekts, an welchem die IMU befestigt ist, messen. Die Lagebestimmung in einem globalen Koordinatensystem erfolgt durch Messen des Vektors der Erdgravitation in Relation zur Lage der IMU. Wenn sich das Objekt bewegt, können dabei Fehler in der Messung der Beschleunigungssensoren auftreten, die durch Sensor Fusion mittels der Daten der Gyroskope kompensiert werden.

Systeme von IMUs werden heutzutage für eine automatisierte oder halb-automatisierte Steuerung von Arbeitsmaschinen verwendet. Die IMUs werden beispielsweise an einem Werkzeugarm der Arbeitsmaschine angeordnet und messen dort die Beschleunigung und die Drehrate. Ein konkretes Einsatzbeispiel sind Bagger, Radlader und Ähnliches, bei denen die IMUs am Baggerarm und gegebenenfalls am Oberwagen angeordnet sind.

Es sind mehrere Ansätze zur Steuerung und Auswertung der IMUs bekannt. Zum einen können einzelne IMUs vorgesehen sein, die mithilfe der Neigung die absolute Lage des Werkzeugarms ermitteln. Die einzelnen IMUs agieren hierbei unabhängig von den anderen IMUs an der Arbeitsmaschine und erhalten auch keine Daten von diesen. Folglich kennen die einzelnen IMUs ihre Lage an der Arbeitsmaschine selbst nicht, sodass diese die auftretenden Beschleunigungen nicht optimal kompensieren können.

Zum anderen sind kombinierte Systeme von IMUs und einer zusätzlichen zentralen Steuereinheit vorgesehen. Die IMUs sind mit der zentralen Steuereinheit verbunden und senden dieser die von den einzelnen IMUs gemessenen Daten. Die Daten können von den IMUs bereits vorverarbeitet werden oder direkt als Rohdaten - also die gemessene Beschleunigung und die gemessene Drehrate - an die zentrale Steuereinheit gesendet werden. Die zentrale Steuereinheit berechnet dann aus den Daten die Position, die (Winkel-)Geschwindigkeit, die Neigung und/oder die Zwischenwinkel zwischen den IMUs. Die zentrale Steuereinheit ist dabei ein Steuergerät, welches extra in die Arbeitsmaschine verbaut werden muss oder ein bereits in der Arbeitsmaschine vorhandenes Steuergerät. Solche kombinierten Systeme mit einem zusätzlichen zentralen Steuergerät sind in der Regel sehr teuer und können nicht einfach nachgerüstet werden. Eine solche Lösung ist beispielsweise aus der US 10,724,842 B2 bekannt.

Die DE 10 2018 118147 A1 offenbart ein Verfahren zum Bestimmen eines Winkels eines Arbeitsgeräts einer Maschine, wobei die Maschine einen Unterwagen und einen dazu drehbaren Oberwagen aufweist, wobei das Arbeitsgerät über ein Drehgelenk an dem Oberwagen derart befestigt ist, dass die Drehachse des Drehgelenks orthogonal zur Drehachse des drehbaren Oberwagens ist, wobei das Arbeitsgerät mit einer IMU, d.h. einer inertialen Messeinheit, versehen ist, die dazu ausgelegt ist, eine Winkelgeschwindigkeit in drei Raumrichtungen zu erfassen, die vorzugsweise senkrecht zueinander sind, und eine erste der drei Raumrichtungen, deren Winkelgeschwindigkeit durch die IMU erfassbar ist, parallel zur Drehachse des Drehgelenks ist. Das Verfahren ist dadurch gekennzeichnet, dass eine bei einer Drehung des Oberwagens auftretende Winkelgeschwindigkeit durch die IMU erfasst wird, und ein Winkel des Arbeitsgeräts relativ zur Drehachse des Oberwagens auf Grundlage der erfassten Oberwagen-Winkelgeschwindigkeit bestimmt wird.

Die US 2018/373275 A1 offenbart ein Verfahren zur Verwendung von Sensor-Feedback zur Steuerung von Fluiddrücken in einer Maschine. Dieses Verfahren umfasst das Empfangen einer Zeitreihe von Signalen von jeder einer Mehrzahl von Trägheitsmesseinheiten (IMUs), die an verschiedenen Komponenten der Maschine angebracht sind, die die Beschleunigung und die Winkelgeschwindigkeit von Bewegungsmessungen für jede der Komponenten der Maschine anzeigen, an denen eine oder mehrere der Mehrzahl von IMUs angebracht sind, und das Empfangen eines Signals von mindestens einem Nicht-IMU-Sensor, das mindestens eines der folgenden Signale anzeigt: Position, Geschwindigkeit oder Beschleunigung von mindestens einer der Maschinenkomponenten, Position, Geschwindigkeit oder Beschleunigung von möglichen Hindernissen oder anderen Merkmalen an einem Einsatzort, an dem die Maschine arbeitet, einen Fluiddruck, eine Motordrehzahl, einen Fluidentlastungsdruck, einen maximalen Pumpenausgangsdruck oder eine Bedienereingabe. Das Verfahren umfasst weiterhin das Lösen einer kinematischen Gleichung unter Verwendung der besten Schätzungen der aktuellen Ausgangsgelenkwinkel für die Komponenten der Maschine und struktureller Konstruktionsinformationen, die die Maschine charakterisieren, das Bestimmen, ob ein höherer Fluiddruck zu einem Fluidbetätigungszylinder, der zwischen zwei der Maschinenkomponenten angeschlossen ist, erforderlich ist, um ein Abwürgen einer der beiden Maschinenkomponenten relativ zu der anderen der beiden Maschinenkomponenten unter Last nach jedem aufeinanderfolgenden Zeitschritt der Reihe von Zeitschritten zu vermeiden, oder ob eine Anpassung an eine Druckabschaltung für eine Fluidpumpe an der Maschine für einen Vorgang erforderlich ist.

Ein aus der DE 10 2021 100324 A1 hervorgehendes Verfahren zum Steuern der Bewegung einer Maschine kann das Empfangen von einer Mehrzahl von Signalen von IMU-Modulen, die an einer entsprechenden Mehrzahl von Komponenten der Maschine montiert sind, enthalten, die Ausrichtungsmessungen und Bewegungsmessungen für die Komponenten der Maschine anzeigen, an denen die Mehrzahl von IMU-Modulen montiert ist. Die IMU-Module enthalten eine entsprechende Anzahl von Zustandsschätzern und bilden ein Maschennetz aus, das kommunikativ mit einem Kommunikationsbus gekoppelt ist. Das Verfahren kann auch das Verschmelzen der Signale, das Bestimmen von Schätzungen von Ausgabeausrichtungsdaten und Ausgabebewegungsdaten für die Komponenten der Maschine basierend auf den verschmolzenen Signalen, das Bestimmen eines Echtzeitwerts für mindestens einer von einer Position, einer Geschwindigkeit oder einer Beschleunigung der Komponenten der Maschine basierend auf einer kinematischen Auswertung und das Anwenden des bestimmten Echtzeitwerts in einer Implementierung einer gesteuerten Betriebsbewegung der Komponenten der Maschine enthalten.

Es stellt sich die Aufgabe, ein System aus IMUs bereitzustellen, welches im Verbund arbeitet, aber kein zusätzliches zentrales Steuergerät benötigt und insbesondere eine verbesserte Vorverarbeitung der durch die IMU erfassten Positionsdaten ermöglicht

### Offenbarung der Erfindung

Es wird ein System aus mehreren an einem Bagger angeordneten IMUs vorgeschlagen, welches zumindest eine Slave-IMU und eine Master-IMU aufweist. Die IMUs sind insbesondere über einen CAN-Bus (Controller Area Network) verbunden.

Eine der IMUs des Systems ist als Master-IMU ausgebildet, die sich von den Slave-IMUs dadurch unterscheidet, dass sie eine Auswerte-Recheneinheit aufweist. Wie die Slave-IMUs ist auch die Master-IMU eingerichtet, selbst Daten zu erfassen. Die Daten sind gleichfalls Drehraten und/oder Beschleunigungen der Objekte, an denen die Master-IMU angeordnet ist. Zudem ist die Master-IMU eingerichtet, die Daten von der zumindest einen obengenannten Slave-IMU zu empfangen. Hierfür kann die Auswerte-Recheneinheit verwendet werden. Alternativ weist die Master-IMU eine zusätzliche Übertragungseinheit auf, um die Daten von der zumindest einen Slave-IMU zu empfangen. Mittels der Auswerte-Recheneinheit ist die Master-IMU eingerichtet, die Daten der zumindest einen Slave-IMU und die von ihr selbst erfassten Daten gemeinsam auszuwerten, um eine kinematische Kette zu ermitteln. Dabei können insbesondere die Positionen und die Winkel der Master-IMU und/oder der zumindest einen Slave-IMU und das Objekt, an dem die zumindest eine Slave-IMU bzw. die Master-IMU angeordnet ist, berechnet werden. Die Auswerte-Recheneinheit der Master-IMU ist eine im Vergleich zur Übertragungseinheit und zur Vorverarbeitungseinheit der Slave-IMU deutlich leistungsstärkere Recheneinheit. Die Master-IMU sendet die ausgewerteten Daten dann an ein Steuergerät eines mit dem System verbundenen Baggers.

Die zumindest eine Slave-IMU ist eingerichtet, Daten zu erfassen und innerhalb des Systems zu übertragen. Die Daten sind Drehraten und/oder Beschleunigungen der Objekte, an denen die zumindest eine Slave-IMU angeordnet ist. Die Daten können als Rohdaten direkt aus der Messung erfasst und übermittelt werden. Die zumindest eine Slave-IMU weist eine Verarbeitungseinheit auf, welche eingerichtet ist, eine Vorverarbeitung der erfassten Daten durchzuführen. Beispielsweise kann aus den Rohdaten eine Direction Cosine Matrix (DCM, Richtungskosinusmatrix) berechnet werden, die dann übermittelt wird. Durch die Vorverarbeitung der Daten, die dezentral in den Slave-IMUs ausgeführt werden kann, wird die anschließende zentrale Auswertung vereinfacht. Zur Übertragung kann die Slave-IMU eine Übertragungseinheit aufweisen. Die Master-IMU übermittelt die Positionsdaten der zumindest einen Slave-IMU an diese.

Die Master-IMU kann eine Übertragungseinheit zur Übertragung der berechneten Daten an das Steuergerät des Baggers aufweisen.

Bereits zwei IMUs, eine Slave-IMU und eine Master-IMU, sind somit ausreichend, um das erfindungsgemäße System zu realisieren. Es können aber auch mehrere Slave-IMUs vorgesehen sein, die mit derselben Master-IMU verbunden sind und dieser die Daten übermitteln. In einem bevorzugten System sind alle IMUs bis auf eine als Slave-IMU ausgebildet. Dadurch werden die Kosten reduziert, da nur die Master-IMU über eine Recheneinheit verfügen muss, die eine Auswertung durchführen kann. In der Praxis haben sich bis zu vier Slave-IMUs und eine Master IMU als besonders vorteilhaft erwiesen. Andere Konfigurationen, beispielsweise mehr als vier Slave-IMUs und eine Master-IMU, sind aber auch möglich.

Dabei ist es auch möglich redundante Systeme zu bilden, bei denen beispielsweise mehrere Slave-IMUs an demselben Glied der kinematischen Kette angeordnet sind. Es sind auch teilredundante Systeme möglich, bei denen beispielsweise zwei IMU-Systeme in einem gemeinsamen Gehäuse montiert sind und über eine Speisung versorgt werden und über denselben CAN-Bus kommunizieren. Solche redundanten Systeme erhöhen die funktionale Sicherheit des Gesamtsystems.

Bei dem System sind die mehreren IMUs miteinander verbunden und die Daten werden gemeinsam ausgewertet. Es ist aber kein zusätzliches Steuergerät notwendig, mit dem die IMUs verbunden sind. Die Auswertung findet innerhalb des Systems in der Master-IMU statt. Dadurch kann das System in einfacher Weise an der Arbeitsmaschine, dem Bagger, implementiert werden, ohne ein zusätzliches Steuergerät beispielsweise im Innenraum der Arbeitsmaschine zu verbauen oder ein bereits vorhandenes elektronisches Steuergerät der Arbeitsmaschine zu verändern. Die Slave-IMUs sind signaltechnisch vorzugsweise nur mit der Master-IMU verbunden. Die Master-IMU kann zudem über eine Benutzerschnittstelle verfügen oder mit einer solchen verbunden sein.

Optional kann zumindest ein Winkelsensor vorgesehen sein, welcher den Winkel eines Objekts, an dem er angeordnet ist, zu einem benachbarten Objekt der kinematischen Kette ermittelt. Dabei können verschiedene Arten von Winkelsensoren vorgesehen werden. Ein Winkelsensor ist bevorzugt im jeweiligen Drehzentrum der Objekte angeordnet oder zumindest mechanisch mit diesem verbunden. Dieser Winkelsensor ist insbesondere am Anfang der kinematischen Kette angeordnet. Ein anderer Winkelsensor ist bevorzugt als Segmentsensor ausgebildet. Ein Segmentsensor misst typischerweise in einem Winkelbereich kleiner als 180° und muss nicht im Drehzentrum angeordnet sein. Der Segmentsensor ist insbesondere am Ende der kinematischen Kette angeordnet, da ein solcher Segmentsensor vor allem im Vergleich zu einer IMU gegenüber starken Vibrationen und Schlägen, die typischerweise am Ende der kinematischen Kette auftreten, unempfindlicher ist. Die Daten des zumindest einen Winkelsensors werden an die Master-IMU übermittelt und dort bei der Auswertung miteinbezogen. Durch den Winkelsensor lassen sich die Winkelposition und die Winkelgeschwindigkeit oftmals besser ermitteln als nur durch die IMUs. Beispielsweise kann die Winkelposition auch bei horizontaler Ausrichtung erfasst werden, was bei IMUs nicht der Fall ist. Somit ist eine genauere Kompensation der Zentripetalbeschleunigung möglich.

Sind mehrere Slave-IMUs vorgesehen, kann die Master-IMU bei der Auswertung aus den gemeinsam ausgewerteten Daten die Zwischenwinkel zwischen den einzelnen Slave-IMUs und/oder der Master-IMU berechnen. Alternativ kann die Master-IMU bei der Auswertung aus den gemeinsam ausgewerteten Daten den absoluten Winkel der einzelnen IMUs zu einer Referenz berechnen. Insbesondere wird die Vertikale als Referenz verwendet.

Das erfindungsgemäße System aus IMUs wird bei einem Bagger verwendet. Dabei sind die IMUs am Bagger und an dessen Baggerarm angeordnet. Generell kann die Master-IMU überall an dem Bagger angeordnet sein. Vorzugsweise ist die Master-IMU am Oberwagen des Baggers angeordnet und die Slave-IMUs sind am Baggerarm und gegebenenfalls an dem Werkzeug angeordnet. Dadurch kann die Master-IMU die Position und Drehrate des Oberwagens und somit des ersten Glieds der kinematischen Kette erfassen.

### Kurze Beschreibung der Zeichnungen

- Figur 1: zeigt eine schematische Schrägansicht eines Baggers, der das erfindungsgemäße System aus IMUs aufweist.
- Figur 2: zeigt eine schematische Draufsicht auf einen Bagger aus Figur 1.

### Ausführungsformen der Erfindung

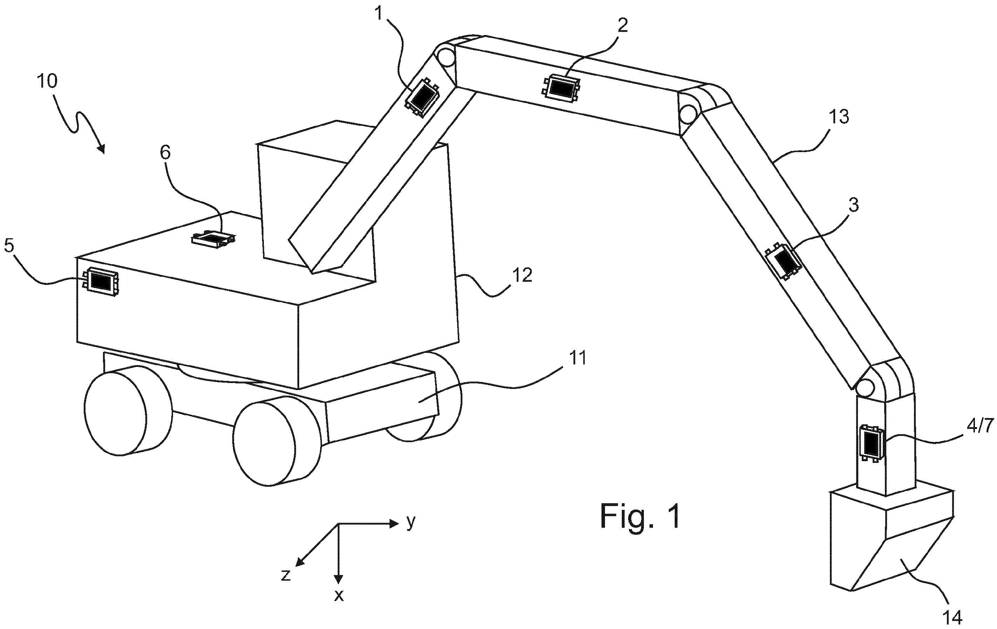

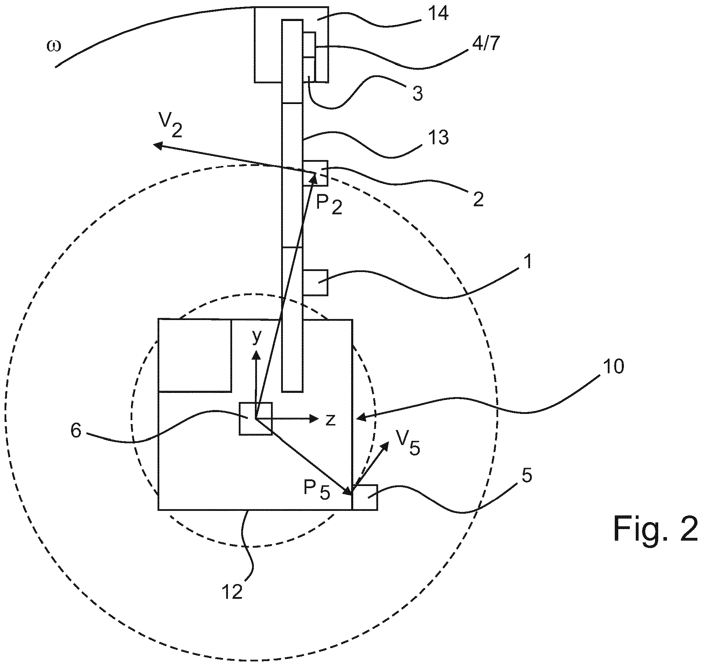

In den Figuren 1 und 2 ist ein Bagger 10 mit einem Unterwagen 11 und einem Oberwagen 12, der am Unterwagen 11 drehbar angeordnet ist, dargestellt. Am Oberwagen 12 ist ein Baggerarm 13 angeordnet, der hier aus vier Segmenten besteht, die zueinander und zum Oberwagen 12 neigbar sind. Am letzten Segment des Baggerarms 13 ist als Werkzeug eine Baggerschaufel 14 angeordnet.

Erfindungsgemäß sind mehrere IMUs 1, 2, 3, 4, 5 vorgesehen, die am Oberwagen 12 und am Baggerarm 13 implementiert sind. An jedem Segment des Baggerarms ist eine Slave-IMU 1, 2, 3, 4, angeordnet, welche eine Beschleunigung, insbesondere relativ zur Erdgravitation in X-Richtung, und eine Drehrate des jeweiligen Segments des Baggerarms 13 erfasst. Die Slave-IMUs 1, 2, 3, 4 weisen keine Auswerte-Recheneinheit auf, die zur vollständigen Auswertung der Daten eingerichtet ist. Allerdings können sie eine leistungsschwächere Verarbeitungseinheit aufweisen, mit der Rohdaten vorverarbeitet werden können. Zudem können die Slave-IMUs eine Übertragungseinheit aufweisen, mit der Daten durch einen CAN-Bus übertragen werden können. Am Oberwagen 12 ist eine Master-IMU 5 angeordnet, welche eine Beschleunigung und eine Drehrate des Oberwagens 12 erfasst. Die Slave-IMUs 1, 2, 3, 4, sind über den CAN-Bus mit der Master-IMU 5 verbunden und senden die erfassten Daten an die Master IMU 5. Die Daten können entweder direkt als erfasste Rohdaten übermittelt werden oder vorher vorverarbeitet werden und dann als vorverarbeitete Daten, beispielsweise als DCM, an die Master-IMU 5 übermittelt werden.

Zudem ist ein Winkelsensor 6 am Oberwagen 12 vorgesehen, der im Drehzentrum angeordnet ist oder anderweitig mechanisch mit dem Drehzentrum verbunden ist und der den Winkel relativ zum Unterwagen 11 in der Y-Z-Ebene senkrecht zur Erdgravitation erfasst. Der Winkelsensor 6 ist ebenfalls mit der Master-IMU 5 verbunden und sendet dieser die Winkel-Daten. An der Verbindung zwischen der Schaufel 14 und dem Baggerarm 13 kann anstelle der Slave-IMU 4 oder zusätzlich zu dieser ein weiterer Winkelsensor vorgesehen sein, der vorzugsweise als Segmentsensor 7 ausgebildet ist. Der Segmentsensor 7 misst den Winkel zwischen der Schaufel 14 und dem letzten Abschnitt des Baggerarms 13 und ist dafür außerhalb des Drehzentrums angeordnet. Der Segmentsensor 7 ist ebenfalls mit der Master-IMU 5 verbunden und sendet dieser die Winkel-Daten. Im Betrieb treten an der Baggerschaufel 14 starke Vibrationen und Schläge auf. Der Segmentsensor 7 wird im Vergleich zur Slave-IMU 4 von diesen weniger beeinträchtigt. Die Master-IMU 5 weist eine Übertragungseinheit auf, mit der die Daten der Slave-IMUs 1, 2, 3, 4 und der Winkelsensoren 6, 7 über den CAN-Bus empfangen werden. Ferner weist die Master-IMU 5 eine Auswerte-Recheneinheit auf, mit der die Daten der Slave-IMUs 1, 2, 3, 4, die erfassten Daten der Master-IMU 5 und die Daten des Winkelsensors 6 und gegebenenfalls die Daten des Segmentsensors 7 gemeinsam ausgewertet werden. Die ausgewerteten Daten werden mittels der Übertragungseinheit an ein (nicht dargestelltes) Steuergerät des Baggers 10 übertragen.

In Figur 2 ist ein Beispiel zur Berechnung der Geschwindigkeit v₂ der Slave-IMU 2 am zweiten Segment des Baggerarms 13 (im Folgenden als zweite IMU 2 bezeichnet) und der Geschwindigkeit v₅ der Master-IMU 5 am Oberwagen 12 gezeigt. Der Baggerarm 13 wird durch die Rotation des Oberwagens 12 zum Unterwagen 11 mitgedreht. Somit sind die Geschwindigkeiten v₂ und v₅ tangential zur Kreisbahn, auf der sich der Oberwagen 12 dreht, und sie sind somit abhängig von dessen Winkelgeschwindigkeit ω. Die Master-IMU 5 ermittelt mit den zusätzlichen Daten des Winkelsensors 6 den Winkel des Oberwagens 12 relativ zum Unterwagen 11. Zudem wird die absolute Position P₅ der Master-IMU 5 im globalen Koordinatensystem (in Figur 2 ist nur die Y-Z-Ebene dargestellt) erfasst. Hierfür kann die Master-IMU 5 ihren absoluten Winkel im globalen Koordinatensystem ermitteln. Zusätzlich oder alternativ kann der Winkelsensor 6 ihre Winkelposition erfassen, aus der die Position P₅ ermittelt werden kann. Hierbei kann auch die Bewegung des Unterwagens 11 im Fahrbetrieb erfasst werden und das verschiedene Verhalten von unterschiedlichen Antriebsarten, wie z. B. Raupenantrieb oder Radantrieb, berücksichtigt werden.

In Figur 2 wird nur der einfache Fall betrachtet, bei dem die Geschwindigkeit v₅ der Master-IMU 5 eine reine Tangentialgeschwindigkeit zum Radius des Drehzentrums des Baggers 10 ist. Für die Berechnung der Geschwindigkeit v₅ der Master-IMU 5 werden in an sich bekannter Weise die Position P₅ der Master-IMU 5 und die Winkelgeschwindigkeit ω des Oberwagens 12 verwendet. Die Berechnung erfolgt direkt in der Auswerte-Recheneinheit der Master-IMU 5. Die Geschwindigkeit v₂ der zweiten IMU 2 wird aus der Position P₂ der zweiten Slave-IMU 2 und der Winkelgeschwindigkeit ω des Oberwagens 12 ebenfalls in an sich bekannter Weise berechnet. Die Position P₂ der zweiten Slave-IMU 2 wird aus den erfassten Beschleunigungs- und Drehratendaten der zweiten Slave-IMU 2 am zweiten Segment, der Slave-IMU 1 am ersten Segment des Baggerarms 13 und der Master-IMU 5 am Oberwagen 12 berechnet. Die Daten der Slave-IMUs 1, 2 werden an die Master-IMU 5 weitergeleitet und die Berechnung erfolgt ebenfalls in der Auswerte-Recheneinheit der Master-IMU 5. Zur Berechnung der Position P₂ der zweiten Slave-IMU 2 kann die Master-IMU 5 den absoluten Winkel der zweiten Slave-IMU 2 zur X-Achse des globalen Koordinatensystems berechnen. Vor allem für die Positionskomponente in X-Richtung kann die Master-IMU 5 alternativ den Zwischenwinkel zwischen der Master-IMU 5 und der Slave-IMU 1 am ersten Segment und den Zwischenwinkel zwischen der Slave-IMU 1 am ersten Segment und der zweiten Slave-IMU 2 ermitteln. Die Informationen über die Position P₂ werden schließlich von der Master-IMU 5 an die zweite Slave-IMU 2 übermittelt.

## Patentansprüche

1. System aus mehreren an einem Bagger (10) angeordneten IMUs (1, 2, 3, 4, 5) mit zumindest einer Slave-IMU (1, 2, 3, 4), welche eingerichtet ist, Daten zu erfassen und zu übertragen,
mit einer Master-IMU (5) mit einer Auswerte-Recheneinheit, welche eingerichtet ist, selbst Daten zu erfassen und Daten von der zumindest einen Slave-IMU (1, 2, 3, 4) zu empfangen und die Daten für eine Berechnung einer kinematischen Kette gemeinsam auszuwerten und die ausgewerteten Daten an ein elektronisches Steuergerät eines mit dem System verbundenen Baggers (10) zu übersenden, **dadurch gekennzeichnet, dass** die zumindest eine Slave-IMU (1, 2, 3, 4) eine Verarbeitungseinheit aufweist, welche eingerichtet ist, eine Vorverarbeitung der erfassten Daten durchzuführen und dass die Master-IMU (5) die Positionsdaten der zumindest einen Slave-IMU (1, 2, 3, 4) an diese übermittelt, wo die übermittelten Positionsdaten in die Vorverarbeitung einfließen.

2. System nach Anspruch 1, **dadurch gekennzeichnet, dass** die Master-IMU eine Übertragungseinheit aufweist, die eingerichtet ist, die Daten von der zumindest einen Slave-IMU zu empfangen und/oder die ausgewerteten Daten an das elektronische Steuergerät des Baggers (10) zu übersenden.

3. System nach einem der vorhergehenden Ansprüche, **gekennzeichnet durch** zumindest einen Winkelsensor (6, 7), welcher den Winkel zwischen zwei Gliedern der kinematischen Kette ermittelt.

4. System nach Anspruch 3, **dadurch gekennzeichnet, dass** ein Winkelsensor an einem Ende der kinematischen Kette angeordnet ist.

5. System nach einem der vorhergehenden Ansprüche, **dadurch gekennzeichnet, dass** mehrere Slave-IMUs (1, 2, 3, 4) vorgesehen sind und dass die Master-IMU (5) eingerichtet ist, die Zwischenwinkel zwischen den einzelnen Slave-IMUs (1, 2, 3, 4) und/oder zwischen der Master-IMU (5) und den einzelnen Slave-IMUs (1, 2, 3, 4) oder die absoluten Winkel der einzelnen IMUs (1, 2, 3, 4, 5) zu einer Referenz aus den gemeinsam ausgewerteten Daten zu berechnen.

6. System nach Anspruch 1, **dadurch gekennzeichnet, dass** die Master-IMU (5) am Oberwagen (12) des Baggers (10) angeordnet ist.

## Claims

1. System consisting of multiple IMUs (1, 2, 3, 4, 5) arranged on an excavator (10), having at least one slave IMU (1, 2, 3, 4) which is set up to detect and transmit data, having a master-IMU (5) with an evaluation computing unit which is set up to detect data itself and to receive data from the at least one slave IMU (1, 2, 3, 4) and to jointly evaluate the data for calculating a kinematic chain and to send the evaluated data to an electronic control device of an excavator (10) connected to the system, **characterised in that** the at least one slave IMU (1, 2, 3, 4) has a processing unit, which is set up to carry out pre-processing of the detected data and that the master IMU (5) transmits the position data of the at least one slave IMU (1, 2, 3, 4) to this, where the transmitted position data feeds into the pre-processing.

2. System according to claim 1, **characterised in that** the master IMU has a transmission unit which is set up to receive the data from the at least one slave IMU and/or to send the evaluated data to the electronic control device of the excavator (10).

3. System according to one of the preceding claims, **characterised by** at least angle sensor (6, 7) which determines the angle between two links of the kinematic chain.

4. System according to claim 3, **characterised in that** an angle sensor is arranged on one end of the kinematic chain.

5. System according to one of the preceding claims, **characterised in that** multiple slave IMUs (1, 2, 3, 4) are provided and that the master IMU (5) is set up to calculate the intermediate angle between the individual slave IMUs (1, 2, 3, 4) and/or between the master IMU (5) and the individual slave IMUs (1, 2, 3, 4) or to calculate the absolute angle of the individual IMUs (1, 2, 3, 4, 5) to a reference from the jointly evaluated data.

6. System according to claim 1, **characterised in that** the master IMU (5) is arranged on the superstructure (12) of the excavator (10).

## Revendications

1. Système composé de plusieurs unités de mesures inertielles (1, 2, 3, 4, 5) disposées sur une excavatrice (10) et comportant au moins une unité de mesure inertielle esclave (1, 2, 3, 4) conçue pour capter et transmettre des données,
et comportant une unité de mesure inertielle principale (5) dotée d'une unité informatique d'évaluation conçue pour capter elle-même des données et pour recevoir des données en provenance de l'au moins une unité de mesure inertielle esclave (1, 2, 3, 4) et pour évaluer conjointement ces données afin de calculer une chaîne cinématique et pour retransmettre lesdites données évaluées vers un appareil de commande électronique d'une excavatrice (10) connectée au système; **caractérisé en ce que** l'au moins une unité de mesure inertielle esclave (1, 2, 3, 4) présente une unité de traitement conçue pour effectuer un prétraitement des données captées et **en ce que** l'unité de mesure inertielle principale (5) communique les données de position de l'au moins une unité de mesure inertielle esclave (1, 2, 3, 4) à cette unité de mesure, dans laquelle les données de position communiquées sont intégrées au prétraitement.

2. Système selon la revendication 1, **caractérisé en ce que** l'unité inertielle principale présente une unité de transmission conçue pour recevoir les données provenant de l'au moins une unité inertielle esclave et/ou pour retransmettre les données évaluées vers l'appareil de commande électronique de l'excavatrice (10).

3. Système selon l'une des revendications précédentes, **caractérisé par** au moins un capteur d'angle (6, 7) qui détermine l'angle entre deux maillons de la chaîne cinématique.

4. Système selon la revendication 3, **caractérisé en ce qu'**un capteur d'angle est disposé à une extrémité de la chaîne cinématique.

5. Système selon l'une des revendications précédentes, **caractérisé en ce que** plusieurs unités de mesures inertielles esclaves (1, 2, 3, 4) sont prévues et **en ce que** l'unité de mesure inertielle principale (5) est conçue pour calculer les angles intermédiaires entre les diverses unités de mesures inertielles esclaves (1, 2, 3, 4) et/ou entre l'unité de mesure inertielle principale (5) et les diverses unités de mesures inertielles esclaves (1, 2, 3, 4), ou pour calculer les angles absolus des unités de mesures inertielles individuelles (1, 2, 3, 4, 5) par rapport à une référence à partir des données conjointement évaluées.

6. Système selon la revendication 1, **caractérisé en ce que** l'unité de mesure inertielle principale (5) est disposée au niveau de la tourelle (12) de l'excavatrice (10).
